# EUROPEAN PATENT SPECIFICATION

(11) **EP 3 844 916 B1**
(45) Date of publication and mention of the grant of the patent: **18.02.2026**
(21) Application number: 19765844.6
(22) Date of filing: 23.08.2019
(51) Int. Cl.: H04L 45/50, H04L 41/5009, H04L 43/0852, H04L 45/28, H04L 43/0829

(54) **PATH MANAGEMENT FOR SEGMENT ROUTING BASED MOBILE USER-PLANE USING SEAMLESS BFD**
PFADVERWALTUNG FÜR AUF SEGMENT-ROUTING BASIERTE MOBILBENUTZEREBENE UNTER VERWENDUNG VON NAHTLOSEM BFD
GESTION DE TRAJET POUR UN PLAN UTILISATEUR MOBILE BASÉ SUR UN ROUTAGE DE SEGMENT À L'AIDE D'UN BFD SANS JOINT

(30) Priority: 31.08.2018 US 201816120118
(43) Date of publication of application: 07.07.2021
(73) Proprietor: Cisco Technology, Inc., San Jose, CA 95134-1706 (US)
(72) Inventor: NAINAR, Nagendra Kumar, Morrisville, SC 27560 (US); PIGNATARO, Carlos M., Cary, NC 27513 (US); GUNDAVELLI, Srinath, San Jose, CA 95135 (US); STAMMERS, Timothy Peter, Raleigh, NC 27612 (US)
(74) Representative: Jarrett, Daniel Phillip
(86) International application number: PCT/US2019/047834
(87) International publication number: WO 2020/046728

(56) References cited:
- US-A1- 2018 077 051
- US-B1- 9 497 107
- Z. AL ET AL: "draft-ali-spring-srv6-oam-00 - Operations, Administration, and Maintenance (OAM) in Segment Routing Networks with IPv6 Data plane (SRv6)", 26 February 2018 (2018-02-26), XP055646114, Retrieved from the Internet <URL:https://tools.ietf.org/html/draft-ali-spring-srv6-oam-00#page-16> [retrieved on 20191125]

## Description

### TECHNICAL FIELD

The present disclosure generally relates to wireless communications.

### BACKGROUND

In a long term evolution (LTE) wireless network, a mobility management architecture may be used to maintain the network connectivity of a mobile node (MN), such as a user equipment (UE) device, as it moves throughout the network. A mobility management architecture may be based on overlay tunnels. For example, in a fifth generation (5G) core network (CN), there may be a general packet radio service (GPRS) tunneling protocol user plane (GTP-U) tunnel on an N6 interface between a next generation nodeB (gNB) node and a user plane function (UPF). An N9 interface may exist between two UPFs. An N3/X2 path may exist between two gNB nodes. Overlay tunnels may be used for steering user plane traffic from the UE device and may hide internet protocol (IP) addressing of the UE device from the transport topology.

US9497107B1 describes, according to its abstract, an example method for seamless path monitoring and rapid fault isolation using bidirectional forwarding detection (BFD) in a network environment and includes determining a BFD target identifier type for communicating in a BFD session in a network environment, determining a non-zero globally assigned BFD discriminator value associated with the BFD target identifier type, populating a Your Discriminator field in a BFD Control Packet with the non-zero globally assigned BFD discriminator value, with a My Discriminator field in the BFD Control Packet being populated with a locally assigned BFD Discriminator value, and initiating the BFD session by transmitting the BFD Control Packet to a target node in the network. In a specific embodiment, the BFD target identifier type is type 3, and the non-zero globally assigned BFD discriminator is an Alert Discriminator reserved by substantially all nodes in the network exclusively for BFD traceroute operations.

US2018077051A1 describes, according to its abstract, methods and systems for detection of reroute occurrences in segment routing enabled networks. In one embodiment, a method includes receiving, at a first node in a communications network, a test message comprising a header, where the header comprises one or more segment identifiers. This embodiment of the method further includes detecting a first indicator of a rerouted test path for the message and sending an outgoing message to a node determined using the header, where sending the outgoing message comprises including in the outgoing message a second indicator that the test message has been rerouted. An embodiment of a system includes a network interface adapted for data communication with one or more nodes of a communications network and a processor operably coupled to the network interface and adapted to implement an embodiment of the method.

### BRIEF DESCRIPTION OF THE DRAWINGS

For an understanding of aspects of various embodiments described herein and to show how they may be carried into effect, reference is made, by way of example only, to the accompanying drawings.
Figure 1 is a diagram that illustrates an example network.
Figure 2 is a diagram that illustrates an example network.
Figure 3 is a flow diagram that illustrates an example process to operate a reflector session according to an implementation.
Figure 4 is a diagram that illustrates an example network architecture.
Figure 5 is a diagram that illustrates an example network in which path liveliness may be validated according to an implementation.
Figure 6 is a diagram that illustrates an example network in which a path may be validated according to an implementation.
Figure 7 is a block diagram that illustrates an example server system.

### DESCRIPTION OF EXAMPLE EMBODIMENTS

### OVERVIEW

The invention to which the present European patent relates is defined in the appended claims.

Numerous details are described in order to provide a thorough understanding of the example embodiments shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example embodiments described herein.

Various embodiments disclosed herein may include devices, systems, and methods for using seamless bidirectional forwarding detection (S-BFD) to validate path liveliness and performance for a path in a network. Diagnostic codes may be reported to a control plane entity. Corrective action may be taken, if appropriate.

In an embodiment, a first control plane entity generates a first seamless bidirectional forwarding detection, S-BFD, control packet. The first S-BFD control packet includes a first discriminator value, a second discriminator value, and a segment routing header. The first discriminator value is set to a discriminator value associated with a network node of a path comprising a plurality of network nodes. The second discriminator value is set to a discriminator value associated with the first control plane entity. The segment routing header is set to an ordered list of values associated with the plurality of network nodes. The values include at least one of an address or a discriminator value. The generated first S-BFD control packet is sent to the network node of the path. At the first control plane entity, a second S-BFD control packet is received, the packet comprising a first discriminator value, a second discriminator value, and a diagnostic code, the first discriminator value of the second S-BFD control packet having a value associated with the first control plane entity, the second discriminator value of the second S-BFD control packet having a value associated with the network node. The diagnostic code is sent, from the network node of the path or from the first control plane entity, to a second control plane entity selected as a function of at least one of the second discriminator value or the diagnostic code for the second control plane entity to take corrective action.

There is provided a device comprising: a network interface in communication with a network; a processor configured to execute computer readable instructions included on a non-transitory memory; and a non-transitory memory including processor-readable instructions, that when executed by the processor, cause the device to perform any of the operations described herein.

There is provided a non-transitory computer readable storage medium storing one or more programs, the one or more programs comprising instructions, that, when executed by a computing device with a non-transitory memory and one or more processors, cause the computing device to perform or cause performance of any of the operations described herein.

### EXAMPLE EMBODIMENTS

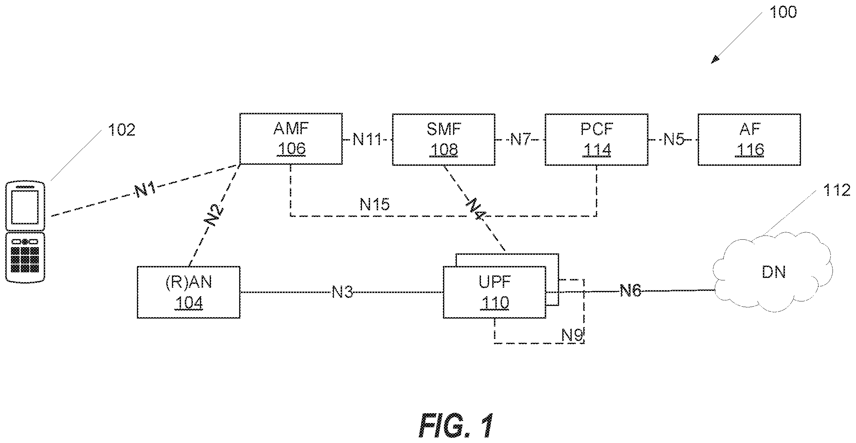

Figure 1 illustrates an example fifth generation (5G) wireless network 100. The network 100 may include a number of network nodes and/or entities, such as a user equipment (UE) device 102, e.g., a mobile telephone. It will be appreciated that the network 100 typically includes multiple UE devices, however, one UE device is depicted for purposes of simplicity.

The network 100 may include an access network 104, which may be implemented as one or more of an evolved universal mobile telecommunications system (UMTS) terrestrial radio access network (E-UTRAN), a radio area network (RAN), and/or a next generation radio area network (NG-RAN). The access network 104 may include one or more eNodeB (eNB) entities and/or one or more next generation NodeB (gNB) devices. The eNB and gNB entities may communicate with one another via one or more X2 interfaces.

The UE device 102 may communicate with the access network 104 via an access and mobility management function (AMF) entity 106. The AMF entity 106 may communicate control signaling with the UE device 102 using an N1 interface. The AMF entity 106 may communicate control signaling with the access network using an N2 interface. The AMF entity 106 may facilitate communication by other network functions with the UE device 102 and/or the access network 104. For example, other network functions may subscribe to notifications regarding mobility events relating to the UE device 102. The AMF entity 106 may support termination of non-access stratum (NAS) signaling. The AMF entity 106 may support NAS ciphering and integrity protection. The AMF entity 106 may support registration management, connection management, and/or mobility management. The AMF entity 106 may support access, authentication, and authorization (AAA) and/or security context management.

The AMF entity 106 may communicate control signaling with a session management function (SMF) entity 108 using an N11 interface. The SMF entity 108 may support session establishment, modification, and/or release. The SMF entity 108 may allocate and manage the allocation of an internet protocol (IP) address to the UE device 102. The SMF entity 108 may support dynamic host configuration protocol (DHCP) functions. The SMF entity 108 may support termination of NAS signaling related to session management. The SMF entity 108 may support traffic steering configuration for one or more user plane function (UPF) entities 110.

The one or more UPF entities 110 may communicate control signaling with the SMF entity 108 using an N4 interface. If multiple UPF entities are present, they may communicate control signaling with each other using one or more U9 interfaces. The one or more UPF entities 110 may communicate data signaling with the access network 104 using an N3 interface. The one or more UPF entities 110 may support packet routing and forwarding. The one or more UPF entities 110 may support packet inspection. The one or more UPF entities 110 may support handling of quality of service (QoS). The one or more UPF entities 110 may act as an external protocol data unit (PDU) session point of interconnect to a data network (DN) 112, such as the internet. The one or more UPF entities 110 may communicate data signaling with the DN 112 using an N6 interface. The one or more UPF entities 110 may serve as an anchor point for mobility within and between radio access technologies (RATs).

A policy control function (PCF) entity 114 may communicate control signaling with the SMF entity 108 using an N7 interface. The PCF entity 114 may communicate control signaling with the AMF entity 106 using an N15 interface. The PCF entity 114 may provide policy rules to other control plane entities. The PCF entity 114 may provide access subscription information for policy decisions in a unified data repository, for example.

An application function (AF) entity 116 may communicate control signaling with the PCF entity 114 using an N5 interface. The AF entity 116 may support application influence on traffic routing. The AF entity 116 may provide access to a network exposure function entity (not shown). The AF entity 116 may interact with the PCF entity 114 to provide policy control.

As the UE device 102 moves throughout the network 100, a mobility management architecture may be used to maintain its network connectivity. The mobility management architecture may be based on overlay tunnels. For example, in a 5G core network (CN), there may be a general packet radio service (GPRS) tunneling protocol user plane (GTP-U) tunnel on an N6 interface between a next generation nodeB (gNB) node and the one or more UPF entities 110. An N9 interface may exist between two UPFs. An N3/X2 path may exist between two gNB nodes. Overlay tunnels may be used for steering user plane traffic from the UE device 102 and may hide internet protocol (IP) addressing of the UE device 102 from the transport topology.

Using overlay tunnels may add significant overhead and scaling costs to the network 100. Overlay tunnels that include a GTP-U tunnel may involve maximum transmission unit (MTU) and/or fragmentation overhead, security, and/or other complexities. Control plane functions may use (e.g., require) the capability to scale and manage many (e.g., hundreds of millions) GTP-U tunnels. As an increasing number of internet of things (IoT) devices become connected, the overhead and scaling costs associated with using overlay tunnels for mobility management may increase.

A mobility management architecture may be implemented using segment routing. For example, segment routing for internet protocol version 6 (IPv6) mobile user plane (MUP) (SRv6-MUP) may be used. SRv6-MUP may use programmability extensions of SRv6. Segment routing may allow user plane traffic to be steered without using overlay tunnels. SRv6-MUP may facilitate removing GTP-C and GTP-U overlay tunnels. It will be appreciated that, while certain aspects of the disclosed subject matter may be disclosed in the context of SRv6 by way of example, the disclosed subject matter may be applicable to other segment routing methodologies without any loss of generality.

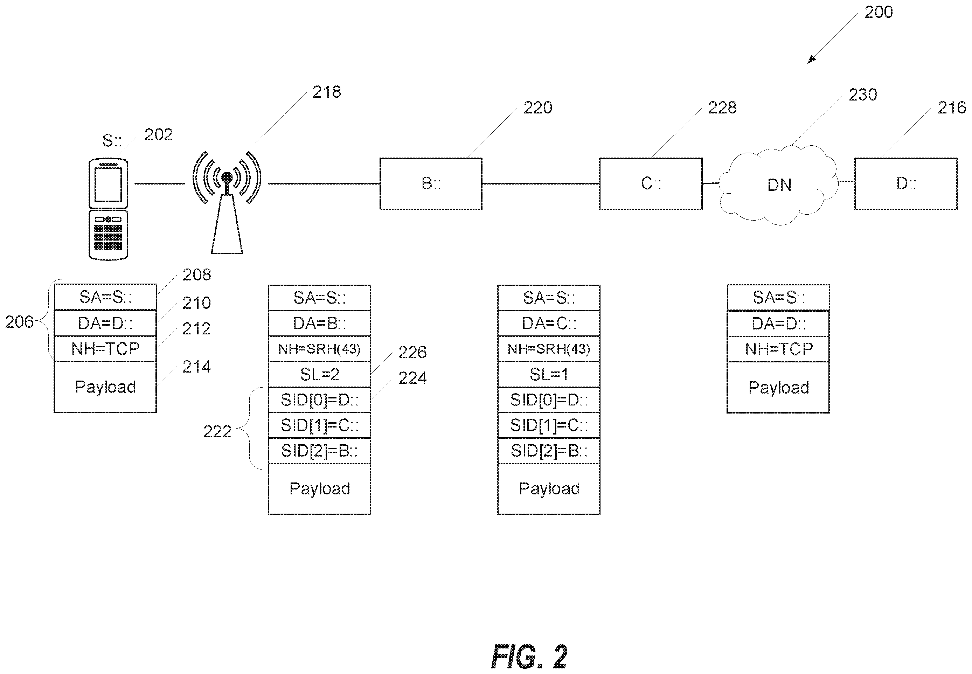

Figure 2 illustrates an example network 200 in which SRv6 segment routing may be employed according to an implementation. The network 200 may include a UE device 202 having an IPv6 address "S::". The UE device 202 may generate a packet 204 with an IPv6 header 206. The IPv6 header 206 may include a source address 208 with a value "S::", a destination address 210 with a value "D::", a next header 212 with a value TCP to identify the following header or protocol, and a payload 214. As indicated by the destination address 210, the packet 204 may be destined for a destination node 216 having an IPv6 address "D::".

The UE device 202 may transmit the packet 204 to a gNB entity 218. The gNB entity 218 may change the value of the destination address 210 to an IPv6 address "B::" of a node 220. The node 220 may be a user plane function (UPF) entity, for example. The value of the next header 212 may also be changed to indicate that segment routing is being used. A segment routing header 222 may be added to the packet 204. The segment routing header 222 may include an ordered list of one or more segment identifiers (SIDs) 224 indicating a path of nodes through which the packet is to be communicated between the UE device 202 and the destination node 216. A segment list field 226 may be added to the packet 204 to indicate the most immediate destination of the packet 204, e.g., the node 220. The packet 204 may then be sent to the node 220.

The node 220 may process the packet 204. The node 220 may then change the value of the destination address 210 and increment or decrement the segment list field 226 (e.g., change the value of the segment list field 226 from SL = 2 to SL = 1) to indicate an IPv6 address "C::" of a node 228 (e.g., corresponding to SL = 1) that is the next destination of the packet 204. The packet 204 may be sent to the node 228. The node 228 may process the packet 204 and may send the packet to a data network (DN) 230, such as the internet. The segment routing header 222 and the segment list field 226 may be removed from the packet 204. The destination address 210 may be changed to the IPv6 address 'D::' of the ultimate destination, the destination node 216.

In some implementations, seamless bidirectional forwarding detection (S-BFD) may be used to validate path liveliness and performance along the path between a next generation radio access network (NG-RAN) and a user plane function (UPF) or PDN gateway (PGW). S-BFD may be used to respond back to the relevant control plane for path computation and instantiation at the relevant segment or layer.

In some implementations, S-BFD may be used to detect a forwarding path between entities, such as between gNB entities, between a gNB entity and a UPF entity, or between two UPF entities. S-BFD may be used to detect a failure of a protocol peer on a user plane path. In some implementations, S-BFD may be used to detect a scenario in which a protocol peer has rebooted and has lost the previous mobility state. Internet protocol service level agreement (IP SLA) metrics may be measured on the user plane path. These metrics may include, for example, jitter, latency, and/or packet loss.

In some implementations, a controller may generate and/or process S-BFD control packets. Generation and/or processing of S-BFD control packets may be an integral part of a 5G management plane. Generation and/or processing of S-BFD control packets may be a standalone service. A standalone service may communicate with a 5G control plane using an out of band (OOB) interface. The service may be assigned a S-BFD discriminator, e.g., "5G-CP-Discrim". The service may act as a server that may trigger a S-BFD control packet to validate an (e.g., arbitrary) path.

In some implementations, each node in the NG-RAN and core network (e.g., eNB, gNB, UPF, SGW, PGW, and the like) may be assigned a locally unique S-BFD discriminator, e.g., "5G-UPF-Discrim" for a UPF entity. A control plane entity may generate a S-BFD control packet having a first discriminator value, e.g., "Your Discriminator," that may be set to a discriminator associated with a node in a path that is to be validated. For example, if the first node in the path to be validated is a UPF entity, the first discriminator value may be set to "5G-UPF-Discrim". The S-BFD control packet may have a second discriminator value, e.g., "My Discriminator," that may be set to a discriminator associated with the control plane entity generating the S-BFD control packet, e.g., "5G-CP-Discrim". The S-BFD control packet may also include a segment routing header (SRH) that may include an ordered list of IPv6 addresses and/or discriminators of network nodes along the path to be validated.

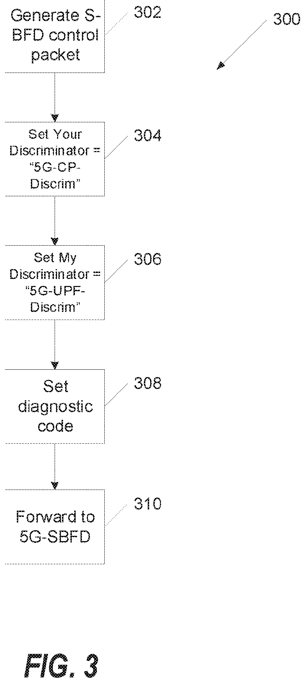

As the S-BFD control packet is communicated along the path to be validated, at each node that receives the S-BFD control packet, a reflector session may be created. Figure 3 illustrates an example process 300 to operate a reflector session. At 302, an S-BFD control packet may be created. At 304, a first discriminator value, e.g., "Your Discriminator," may be set to "5G-CP-Discrim". At 306, a second discriminator value, e.g., "My Discriminator," may be set to "5G-UPF-Discrim". At 308, a relevant diagnostic (e.g., DIAG) code may be set. For example, a diagnostic code may indicate that there are no issues with the session. A diagnostic code may indicate that performance was poor, e.g., was below a metric. A diagnostic code may indicate that a probe was not received after a timeout period. At 310, the S-BFD control packet may be forwarded to a 5G-SBFD service.

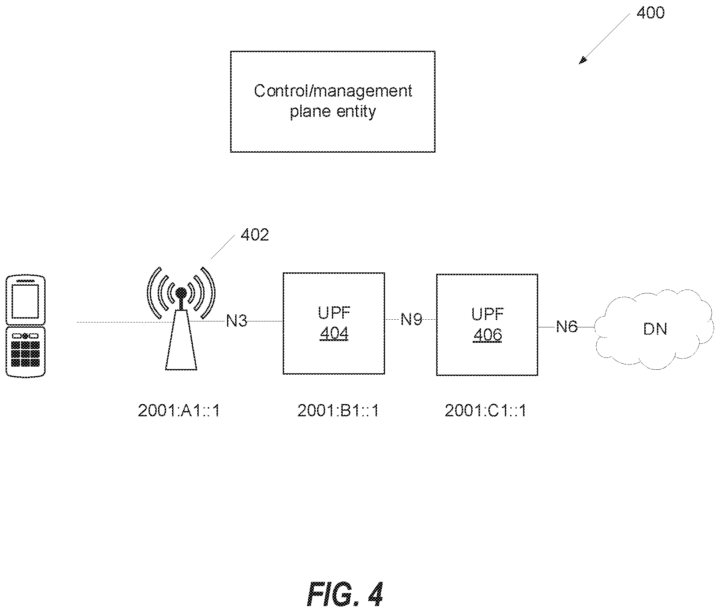

Figure 4 is a block diagram illustrating an example 5G architecture 400 including several example nodes. It will be appreciated that Figure 4 is not intended to depict a complete 5G network and various nodes are omitted for simplicity. The nodes in the NG-RAN and core network of the 5G architecture 400 may each be assigned a discriminator value, e.g., for 5G-UPF-Discrim. For example, a first NG-RAN node, e.g., a gNB entity 402, with an IPv6 address "2001:A1::1" may be assigned a discriminator of "0xa1a1a1a1". A second NG-RAN node, e.g., a UPF entity 404, with an IPv6 address "2001:B1::1" may be assigned a discriminator of "0xb1b1b1b1". A third NG-RAN node, e.g., a UPF entity 406, with an IPv6 address "2001:C1::1" may be assigned a discriminator of "0xc1c1c1c1".

If SRv6 is used as an overlay tunneling mechanism, a (e.g., globally) unique SRv6 segment identifier (SID) may be assigned as a discriminator SID. A discriminator SID may be a non-routable SID that may carry a discriminator value, e.g., "5G-UPF-Discriminator," in a function or arguments field. In the example shown in Figure 4, a SID "2001:DDDD::/64" may be assigned. The function or arguments field of the discriminator SID may be used to carry the discriminator value, e.g., "5G-UPF-Discriminator," which may be 32 bits long.

A network node may implement a punt and forward semantic when it receives a packet with a discriminator SID. For example, the network node may punt one copy of the packet to a control plane entity. The network node may increment the segment left and forward the packet to another network node based on the next SID.

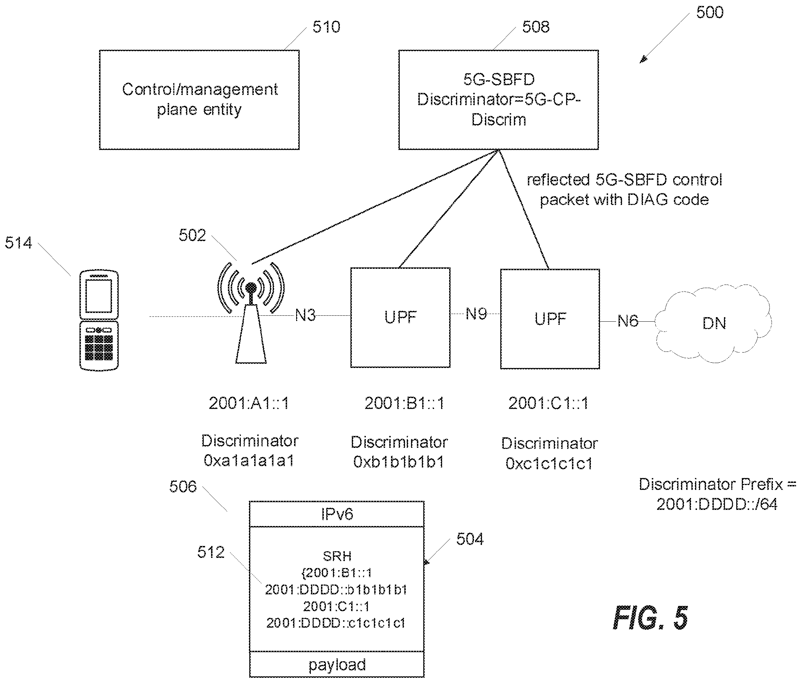

Figure 5 illustrates an example network 500 in which path liveliness may be validated according to an implementation. An ingress node, such as a gNB entity 502, may push a segment routing header (SRH) 504 of a packet 506. The ingress node may insert a combination of a prefix SID followed by a discriminator SID, e.g., 5G-Discriminator-SID. In an implementation, a 5G seamless bidirectional forwarding detection (5G-SBFD) function entity 508 may generate a S-BFD control packet. The 5G-SBFD function entity 508 may consult with a control or management plane entity 510, such as a topology server (e.g., a path computation element (PCE) server). The 5G-SBFD function entity 508 may generate a SID stack 512 and forward the control packet, which may be a SRv6 encapsulated packet.

A node that receives the control packet with a value at the top of the SID stack 512 of the discriminator SID, e.g., 5G-Discriminator-SID, may follow the procedure disclosed herein in connection with Figures 3-4. For example, the node may generate a S-BFD packet, e.g., a reflected S-BFD control packet, as a response to the control packet with a diagnostic code. The reflected S-BFD control packet may have a first discriminator value, e.g., a Your Discriminator value, set to a discriminator value of the 5G-SBFD entity 508. The reflected S-BFD control packet may have a second discriminator value, e.g., a My Discriminator value, set to a local discriminator value of the node.

The diagnostic code may be used to signal any issues in the path and/or local resources. The diagnostic code may indicate that no failure or error was identified. The diagnostic code may indicate that while the control packet was received, performance was poor, e.g., below a threshold. The diagnostic code may indicate a failure, e.g., that the control packet was not received after a timeout period.

The node may send the S-BFD packet with the diagnostic code to a control plane entity. The control plane entity may be selected based on a discriminator value, e.g., a My Discriminator value, which may indicate the node at which an error or issue occurred. For example, if the discriminator value indicates that the error or issue occurred at a gNB entity, the diagnostic code may be sent to a radio control plane entity. If the discriminator value indicates that the error or issue occurred at a first user plane function entity, the diagnostic code may be sent to a mobile control plane entity. If the discriminator value indicates that the error or issue occurred at a second user plane function entity, the diagnostic code may be sent to a path computation element (PCE).

The control plane entity may use the information conveyed by the diagnostic code to make changes or take other corrective action at one or more layers for a service level agreement (SLA) constrained path to and from a UE device 514. For example, the control plane entity may select a different path or reboot one or more devices.

Various implementations are disclosed in the context of using SRv6 as an overlay mechanism. It will be appreciated that the principles disclosed herein are applicable, without any loss of generality, to networks using other overlay mechanisms, including, but not limited to, network service header (NSH), general packet radio service (GPRS) tunneling protocol user plane (GTP-U), etc. The in situ operations, administration, and management (OAM) capability of the overlay tunnel to carry the discriminator value 5G-UPF-Discrim may be leveraged. Validation may be performed on relevant network nodes.

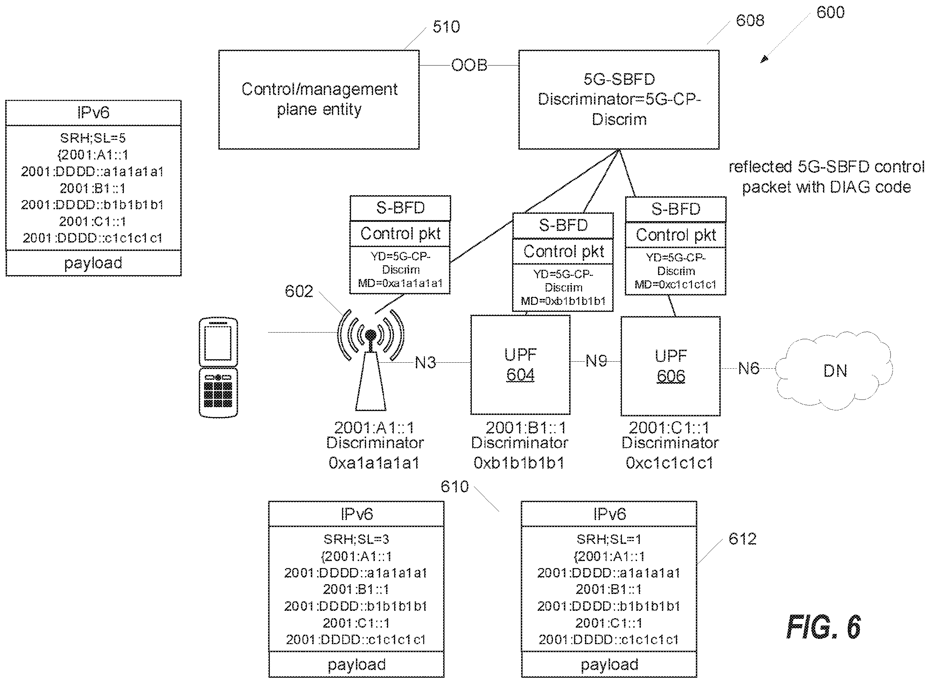

Figure 6 illustrates an example network 600 in which a path may be validated according to an implementation. The path to be validated may include, for example, an NG-RAN entity (e.g., a gNB entity 602), a first UPF entity (e.g., a serving gateway (SGW)) 604, and a second UPF entity (e.g., a packet data network (PDN) gateway (PGW)) 606. The NG-RAN entity 602 may have an IPv6 address "2001:A1::1" and a local discriminator "0xa1a1a1a1". The UPF entity 604 may have an IPv6 address "2001:B1::1" and a local discriminator "0xb1b1b1b1". The UPF entity 606 may have an IPv6 address "2001:C1::1" and a local discriminator "0xc1c1c1c1".

A 5G-SBFD function entity 608 may be interested in validating this path, for example, to assess the functionality of one or more nodes along the path. The 5G-SBFD function entity 608 may generate an S-BFD control packet 610 with a SID stack 612. The SID stack 612 may be positioned such that each 5G element (e.g., entity) may receive the control packet with a discriminator SID, e.g., 5G-UPF-Discriminator SID, that may be used to respond back to the 5G-SBFD function entity 608.

As each node receives the S-BFD control packet 610 with the discriminator SID at the top of the SID stack 612, it may punt one copy of the S-BFD control packet 610 to a reflector session, e.g., as disclosed herein in connection with Figures 3-4. Another copy of the S-BFD control packet 610 may be forwarded to a node corresponding to the next SID in the SID stack 612.

The reflector session may reflect and generate an S-BFD control packet with a first discriminator value (e.g., Your Discriminator (YD)) and a second discriminator value (e.g., My Discriminator (MD)) set. The S-BFD control packet may be forwarded to the 5G-SBFD function entity 608. In some implementations, a node may include a timestamp in a segment routing header when forwarding the response to the 5G-SBFD function entity 608. The 5G-SBFD function entity 608 may use the timestamp to validate the liveliness of the path, as well as the latency between each segment of the path.

For example, the S-BFD control packet 610 may first be received by the gNB entity 602. The gNB entity 602 may punt one copy of the control packet 610 to a reflector session and forward another copy to the first UPF entity 604. In the reflector session, YD may be set to "5G-CP-Discrim", the discriminator value of the 5G-SBFD function entity 608. MD may be set to the local discriminator value of the gNB entity 602 "0xa1a1a1a1". The SID stack 612 may be modified to indicate that the next node is the first UPF entity 604.

Next, the first UPF entity 604 may receive the S-BFD control packet 610. The first UPF entity 604 may punt one copy of the S-BFD control packet 610 to a reflector session and forward another copy to the second UPF entity 606. In the reflector session, YD may be set to "5G-CP-Discrim". MD may be set to the local discriminator value of the first UPF entity 604, "0xb1b1b1b1". The SID stack 612 may be modified to indicate that the next node is the second UPF entity 606.

Next, the second UPF entity 606 may receive the S-BFD control packet 610. The second UPF entity 606 may punt the S-BFD control packet 610 to a reflector session. In the reflector session, YD may be set to "5G-CP-Discrim". MD may be set to the local discriminator value of the second UPF entity 606 "0xc1c1c1c1".

In the event of a violation, e.g., of a policy or failure of a segment or a node, the 5G-SBFD function entity 608 may signal the violation or failure to a 5G control or management plane entity 614 with details about the failure segment or node. This information may be used to make a decision on a routing change or a new path instantiation.

An example of error reporting logic may include:

```
 if DIAG=fail {
   if my_discrim=0xa1a1a1a1
       report_to_radio_cp;
   }elif my_discrim=0xb1b1b1b1
       report_to_mobile_cp;
   }elif my_discrim=0xc1c1c1c1
       report_to_core_pce
   }elif...
```

The 5G-SBFD function entity 608 may use the discriminator, as well as other details, to identify the appropriate control plane entity to which to send an error report and/or determine other details (e.g., path, node, etc.) for path management.

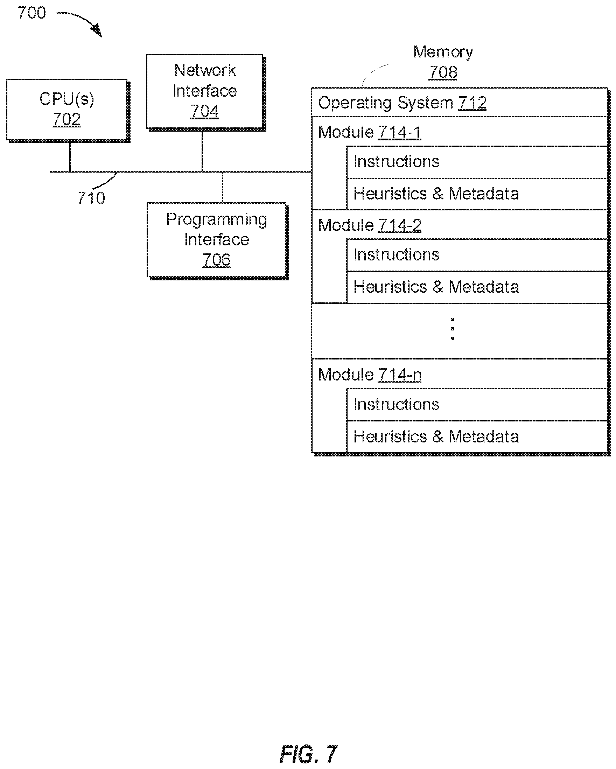

Figure 7 is a block diagram of an example server system 700 enabled with one or more components of a device, server, or system in accordance with some implementations. While certain specific features are illustrated, those of ordinary skill in the art will appreciate from the present disclosure that various other features have not been illustrated for the sake of brevity, and so as not to obscure more pertinent aspects of the implementations disclosed herein. To that end, as a non-limiting example, in some implementations the server system 700 may include one or more processing units (CPUs) 702, a network interface 704, a programming interface 706, a memory 708, and one or more communication buses 710 for interconnecting these and various other components.

The network interface 704 may be provided to, among other uses, establish and/or maintain a metadata tunnel between a cloud-hosted network management system and at least one private network including one or more compliant devices. In some implementations, the one or more communication buses 710 may include circuitry that interconnects and controls communications between system components. The memory 708 may include one or more of high-speed random access memory, such as DRAM, SRAM, DDR RAM, or other random access solid state memory devices; and may include non-volatile memory, such as one or more magnetic disk storage devices, optical disk storage devices, flash memory devices, or other non-volatile solid state storage devices. The memory 708 may include one or more storage devices remotely located from the one or more CPUs 702. The memory 708 may comprise a non-transitory computer readable storage medium.

In some implementations, the memory 708 or the non-transitory computer readable storage medium of the memory 708 may include (e.g., store) the following programs, modules, and data structures, or a subset thereof including one or more of an operating system 712 or various modules 714-1, 714-2, ..., 714-n. The modules 714-1, 714-2, ..., 714-n, individually and/or collectively, perform one or more of the operations described herein. To that end, in various implementations, the modules 714-1, 714-2, ..., 714-n may include respective instructions and/or logic, and heuristics and metadata.

Various aspects of implementations within the scope of the appended claims are described above. It should be apparent that the various features of implementations described above may be embodied in a wide variety of forms and that any specific structure and/or function described above is merely illustrative. Based on the present disclosure, one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first", "second", etc. may be used herein to describe various elements, these elements should not be limited by these terms. These terms are only used to distinguish one element from another. For example, a first contact could be termed a second contact, and, similarly, a second contact could be termed a first contact, which changing the meaning of the description, so long as all occurrences of the "first contact" are renamed consistently and all occurrences of the second contact are renamed consistently. The first contact and the second contact are both contacts, but they are not the same contact.

The terminology used herein is for the purpose of describing particular embodiments only and is not intended to be limiting of the claims. As used in the description of the embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting", that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
generating (302), at a first control plane entity (608), a first seamless bidirectional forwarding detection, S-BFD, control packet (610) comprising a first discriminator value, a second discriminator value, and a segment routing header (612);
setting (304) the first discriminator value to a discriminator value associated with a network node (602) of a path comprising a plurality of other network nodes (604, 606);
setting (306) the second discriminator value to a discriminator value associated with the first control plane entity (608);
setting the segment routing header (612) to an ordered list of values associated with the plurality of network nodes (602, 604, 606), the values comprising at least one of an address or a discriminator value;
sending the generated first S-BFD control packet to the network node of the path;
receiving (310), at the first control plane entity (608), a second S-BFD control packet comprising a first discriminator value, a second discriminator value, and a diagnostic code, the first discriminator value of the second S-BFD control packet having a value associated with the first control plane entity, the second discriminator value of the second S-BFD control packet having a value associated with the network node; and
sending the diagnostic code, from the network node of the path or from the first control plane entity, to a second control plane entity (510) selected as a function of at least one of the second discriminator value or the diagnostic code for the second control plane entity to take corrective action.

2. The method of claim 1, wherein the second control plane entity comprises at least one of a radio control plane entity, a mobile control plane entity, or a path computation element.

3. The method of any of claims 1 to 2, wherein the second S-BFD control packet comprises a segment routing header, the segment routing header of the second S-BFD control packet comprising a timestamp.

4. The method of claim 3, further comprising determining a service level agreement, SLA, metric based on at least one of the diagnostic code or the timestamp,
optionally wherein the SLA metric comprises a latency of a segment of the path.

5. The method of any of claims 1 to 4, further comprising identifying a path loss based on the diagnostic code.

6. The method of any of claims 1 to 5, further comprising identifying a failure of the network node based on the diagnostic code.

7. The method of any of claims 1 to 6, further comprising determining that the network node has rebooted based on the diagnostic code.

8. A device comprising:
a network interface in communication with a network;
a processor configured to cause the device to:
generate (302), at a first control plane entity (608), a first seamless bidirectional forwarding detection, S-BFD, control packet (610) comprising a first discriminator value, a second discriminator value, and a segment routing header (612);
set (304) the first discriminator value to a discriminator value associated with a network node (602) of a path comprising a plurality of other network nodes (604. 606);
set (306) the second discriminator value to a discriminator value associated with the first control plane entity (608);
set the segment routing header (612) to an ordered list of values associated with the plurality of network nodes (602, 604, 606), the values comprising at least one of an address or a discriminator value;
send the generated first S-BFD control packet to the network node of the path;
receive (310), at the first control plane entity (608), a second S-BFD control packet comprising a first discriminator value, a second discriminator value, and a diagnostic code, the first discriminator value of the second S-BFD control packet having a value associated with the first control plane entity, the second discriminator value of the second S-BFD control packet having a value associated with the network node; and
send the diagnostic code, from the network node of the path or from the first control plane entity, to a second control plane entity (510) selected as a function of at least one of the second discriminator value or the diagnostic code for the second control plane entity to take corrective action.

9. The device of claim 8, wherein the second control plane entity comprises at least one of a radio control plane entity, a mobile control plane entity, or a path computation element.

10. The device of any of claims 8 to 9, wherein the second S-BFD control packet comprises a segment routing header, the segment routing header of the second S-BFD control packet comprising a timestamp.

11. The device of claim 10, wherein the processor is further configured to cause the device to determine a service level agreement, SLA, metric based on at least one of the diagnostic code or the timestamp,
optionally wherein the SLA metric comprises a latency of a segment of the path.

12. The device of any of claims 8 to 11, wherein the processor is further configured to cause the device to identify a path loss based on the diagnostic code.

13. The device of any of claims 8 to 12, wherein the processor is further configured to cause the device to identify a failure of the network node based on the diagnostic code.

14. The device of any of claims 8 to 13, wherein the processor is further configured to cause the device to determine that the network node has rebooted based on the diagnostic code.

15. A computer readable storage medium storing one or more programs, the one or more programs comprising instructions, that, when executed by a computing device, cause the computing device to perform or cause performance of the method of any of claims 1 to 7.

## Patentansprüche

1. Ein Verfahren, aufweisend:
Erzeugen (302), bei einer ersten Steuerungsebenenentität (608), eines ersten nahtlosen bidirektionalen Weiterleitungsdetektions-, S-BFD-, Steuerpakets (610), aufweisend einen ersten Diskriminatorwert, einen zweiten Diskriminatorwert und einen Segment-Routing-Header (612);
Setzen (304) des ersten Diskriminatorwerts auf einen Diskriminatorwert, der einem Netzwerkknoten (602) eines Pfads zugeordnet ist, der eine Vielzahl weiterer Netzwerkknoten (604, 606) aufweist;
Setzen (306) des zweiten Diskriminatorwerts auf einen Diskriminatorwert, der der ersten Steuerungsebenenentität (608) zugeordnet ist;
Setzen des Segment-Routing-Headers (612) auf eine geordnete Liste von Werten, die der Vielzahl von Netzwerkknoten (602, 604, 606) zugeordnet sind, wobei die Werte mindestens eines von einer Adresse oder einem Diskriminatorwert aufweisen;
Senden des erzeugten ersten S-BFD-Steuerpakets an den Netzwerkknoten des Pfads;
Empfangen (310), bei der ersten Steuerungsebenenentität (608), eines zweiten S-BFD-Steuerpakets, aufweisend einen ersten Diskriminatorwert, einen zweiten Diskriminatorwert und einen Diagnosecode, wobei der erste Diskriminatorwert des zweiten S-BFD-Steuerpakets einen Wert aufweist, der der ersten Steuerungsebenenentität zugeordnet ist, und der zweite Diskriminatorwert des zweiten S-BFD-Steuerpakets einen Wert aufweist, der dem Netzwerkknoten zugeordnet ist; und
Senden des Diagnosecodes, von dem Netzwerkknoten des Pfads oder von der ersten Steuerungsebenenentität, an eine zweite Steuerungsebenenentität (510), die als Funktion von mindestens einem von dem zweiten Diskriminatorwert oder dem Diagnosecode ausgewählt wird, damit die zweite Steuerungsebenenentität Korrekturmaßnahmen ergreift.

2. Das Verfahren nach Anspruch 1, wobei die zweite Steuerungsebenenentität mindestens eines von einer Funk-Steuerungsebenenentität, einer mobilen Steuerungsebenenentität oder einem Pfadberechnungselement aufweist.

3. Das Verfahren nach einem der Ansprüche 1 bis 2, wobei das zweite S-BFD-Steuerpaket einen Segment-Routing-Header aufweist, wobei der Segment-Routing-Header des zweiten S-BFD-Steuerpakets einen Zeitstempel aufweist.

4. Das Verfahren nach Anspruch 3, ferner aufweisend das Bestimmen einer Service-Level-Agreement-, SLA-, Metrik basierend auf mindestens einem von dem Diagnosecode oder dem Zeitstempel, optional wobei die SLA-Metrik eine Latenz eines Segments des Pfads aufweist.

5. Das Verfahren nach einem der Ansprüche 1 bis 4, ferner aufweisend das Identifizieren eines Pfadverlusts basierend auf dem Diagnosecode.

6. Das Verfahren nach einem der Ansprüche 1 bis 5, ferner aufweisend das Identifizieren eines Ausfalls des Netzwerkknotens basierend auf dem Diagnosecode.

7. Das Verfahren nach einem der Ansprüche 1 bis 6, ferner aufweisend das Bestimmen, dass der Netzwerkknoten basierend auf dem Diagnosecode neu gestartet wurde.

8. Eine Vorrichtung, aufweisend:
eine Netzwerkschnittstelle in Kommunikation mit einem Netzwerk;
einen Prozessor, der konfiguriert ist, die Vorrichtung zu veranlassen, zu:
Erzeugen (302), bei einer ersten Steuerungsebenenentität (608), eines ersten nahtlosen bidirektionalen Weiterleitungsdetektions-, S-BFD-, Steuerpakets (610), aufweisend einen ersten Diskriminatorwert, einen zweiten Diskriminatorwert und einen Segment-Routing-Header (612);
Setzen (304) des ersten Diskriminatorwerts auf einen Diskriminatorwert, der einem Netzwerkknoten (602) eines Pfads zugeordnet ist, der eine Vielzahl weiterer Netzwerkknoten (604, 606) aufweist;
Setzen (306) des zweiten Diskriminatorwerts auf einen Diskriminatorwert, der der ersten Steuerungsebenenentität (608) zugeordnet ist;
Setzen des Segment-Routing-Headers (612) auf eine geordnete Liste von Werten, die der Vielzahl von Netzwerkknoten (602, 604, 606) zugeordnet sind, wobei die Werte mindestens eines von einer Adresse oder einem Diskriminatorwert aufweisen;
Senden des erzeugten ersten S-BFD-Steuerpakets an den Netzwerkknoten des Pfads;
Empfangen (310), bei der ersten Steuerungsebenenentität (608), eines zweiten S-BFD-Steuerpakets, aufweisend einen ersten Diskriminatorwert, einen zweiten Diskriminatorwert und einen Diagnosecode, wobei der erste Diskriminatorwert des zweiten S-BFD-Steuerpakets einen Wert aufweist, der der ersten Steuerungsebenenentität zugeordnet ist, und der zweite Diskriminatorwert des zweiten S-BFD-Steuerpakets einen Wert aufweist, der dem Netzwerkknoten zugeordnet ist; und
Senden des Diagnosecodes, von dem Netzwerkknoten des Pfads oder von der ersten Steuerungsebenenentität, an eine zweite Steuerungsebenenentität (510), die als Funktion von mindestens einem von dem zweiten Diskriminatorwert oder dem Diagnosecode ausgewählt wird, damit die zweite Steuerungsebenenentität Korrekturmaßnahmen ergreift.

9. Die Vorrichtung nach Anspruch 8, wobei die zweite Steuerungsebenenentität mindestens eines von einer Funk-Steuerungsebenenentität, einer mobilen Steuerungsebenenentität oder einem Pfadberechnungselement aufweist.

10. Die Vorrichtung nach einem der Ansprüche 8 bis 9, wobei das zweite S-BFD-Steuerpaket einen Segment-Routing-Header aufweist, wobei der Segment-Routing-Header des zweiten S-BFD-Steuerpakets einen Zeitstempel aufweist.

11. Die Vorrichtung nach Anspruch 10, wobei der Prozessor ferner konfiguriert ist, die Vorrichtung zu veranlassen, eine Service-Level-Agreement-, SLA-, Metrik basierend auf mindestens einem von dem Diagnosecode oder dem Zeitstempel zu bestimmen, optional wobei die SLA-Metrik eine Latenz eines Segments des Pfads aufweist.

12. Die Vorrichtung nach einem der Ansprüche 8 bis 11, wobei der Prozessor ferner konfiguriert ist, die Vorrichtung zu veranlassen, einen Pfadverlust basierend auf dem Diagnosecode zu identifizieren.

13. Die Vorrichtung nach einem der Ansprüche 8 bis 12, wobei der Prozessor ferner konfiguriert ist, die Vorrichtung zu veranlassen, einen Ausfall des Netzwerkknotens basierend auf dem Diagnosecode zu identifizieren.

14. Die Vorrichtung nach einem der Ansprüche 8 bis 13, wobei der Prozessor ferner konfiguriert ist, die Vorrichtung zu veranlassen, zu bestimmen, dass der Netzwerkknoten basierend auf dem Diagnosecode neu gestartet wurde.

15. Ein computerlesbares Speichermedium, das ein oder mehrere Programme speichert, wobei die ein oder mehreren Programme Anweisungen aufweisen, die, wenn sie von einer Recheneinrichtung ausgeführt werden, die Recheneinrichtung veranlassen, das Verfahren nach einem der Ansprüche 1 bis 7 auszuführen oder dessen Ausführung zu veranlassen.

## Revendications

1. Procédé comprenant le fait :
de générer (302), au niveau d'une première entité (608) du plan de contrôle, un premier paquet de contrôle (610) de détection de transfert bidirectionnel transparent, S-BFD, comprenant une première valeur de discrimination, une deuxième valeur de discrimination et un en-tête de routage de segment (612) ;
de définir (304) la première valeur de discrimination par rapport à une valeur de discrimination associée à un nœud de réseau (602) d'un chemin comprenant une pluralité d'autres nœuds de réseau (604, 606) ;
de définir (306) la deuxième valeur de discrimination par rapport à une valeur de discrimination associée à la première entité (608) du plan de contrôle ;
de définir l'en-tête de routage de segment (612) par rapport à une liste ordonnée de valeurs associées à la pluralité de nœuds de réseau (602, 604, 606), lesdites valeurs comprenant au moins l'une ou l'autre d'une adresse ou d'une valeur de discrimination ;
d'envoyer, au nœud de réseau du chemin, le premier paquet de contrôle S-BFD ayant été généré ;
de recevoir (310), au niveau de la première entité (608) du plan de contrôle, un deuxième paquet de contrôle S-BFD comprenant une première valeur de discrimination, une deuxième valeur de discrimination et un code de diagnostic, la première valeur de discrimination du deuxième paquet de contrôle S-BFD ayant une valeur associée à la première entité du plan de contrôle, la deuxième valeur de discrimination du deuxième paquet de contrôle S-BFD ayant une valeur associée au nœud du réseau ; et
d'envoyer le code de diagnostic, depuis le nœud de réseau du chemin ou bien depuis la première entité du plan de contrôle, à une deuxième entité (510) du plan de contrôle sélectionnée en fonction au moins de l'une ou l'autre de la deuxième valeur de discrimination ou du code de diagnostic pour la deuxième entité du plan de contrôle, afin de mettre en œuvre une action corrective.

2. Procédé selon la revendication 1, dans lequel la deuxième entité du plan de contrôle comprend au moins l'une ou l'autre d'une entité du plan de commande radio, d'une entité du plan de commande mobile ou d'un élément de calcul de trajectoire.

3. Procédé selon l'une des revendications 1 à 2, dans lequel le deuxième paquet de contrôle S-BFD comprend un en-tête de routage de segment, l'en-tête de routage de segment du deuxième paquet de contrôle S-BFD comprenant un horodatage.

4. Procédé selon la revendication 3, comprenant en outre la détermination d'une métrique d'accord de niveau de service, SLA, en se basant sur au moins l'un ou l'autre du code de diagnostic ou de l'horodatage,
éventuellement procédé dans lequel la métrique SLA comprend une latence d'un segment du chemin.

5. Procédé selon l'une quelconque des revendications 1 à 4, comprenant en outre l'identification d'une perte de chemin, en se basant sur le code de diagnostic.

6. Procédé selon l'une quelconque des revendications 1 à 5, comprenant en outre l'identification d'une panne du nœud de réseau, en se basant sur le code de diagnostic.

7. Procédé selon l'une quelconque des revendications 1 à 6, comprenant en outre la détermination du fait que le nœud de réseau a redémarré, en se basant sur le code de diagnostic.

8. Dispositif comprenant:
une interface réseau en communication avec un réseau ;
un processeur configuré pour amener le dispositif à :
générer (302), au niveau d'une première entité (608) du plan de contrôle, un premier paquet de contrôle (610) de détection de transfert bidirectionnel transparent, S-BFD, comprenant une première valeur de discrimination, une deuxième valeur de discrimination et un en-tête de routage de segment (612) ;
définir (304) la première valeur de discrimination par rapport à une valeur de discrimination associée à un nœud de réseau (602) d'un chemin comprenant une pluralité d'autres nœuds de réseau (604, 606) ;
définir (306) la deuxième valeur de discrimination par rapport à une valeur de discrimination associée à la première entité (608) du plan de contrôle ;
définir l'en-tête de routage de segment (612) par rapport à une liste ordonnée de valeurs associées à la pluralité de nœuds de réseau (602, 604, 606), lesdites valeurs comprenant au moins l'une ou l'autre d'une adresse ou d'une valeur de discrimination ;
envoyer, au nœud de réseau du chemin, le premier paquet de contrôle S-BFD ayant été généré ;
recevoir (310), au niveau de la première entité (608) du plan de contrôle, un deuxième paquet de contrôle S-BFD comprenant une première valeur de discrimination, une deuxième valeur de discrimination et un code de diagnostic, la première valeur de discrimination du deuxième paquet de contrôle S-BFD ayant une valeur associée à la première entité du plan de contrôle, la deuxième valeur de discrimination du deuxième paquet de contrôle S-BFD ayant une valeur associée au nœud du réseau ; et
envoyer le code de diagnostic, depuis le nœud de réseau du chemin ou bien depuis la première entité du plan de contrôle, à une deuxième entité (510) du plan de contrôle sélectionnée en fonction au moins de l'une ou l'autre de la deuxième valeur de discrimination ou du code de diagnostic pour la deuxième entité du plan de contrôle, afin de mettre en œuvre une action corrective.

9. Dispositif selon la revendication 8, dans lequel la deuxième entité du plan de contrôle comprend au moins l'une ou l'autre d'une entité du plan de commande radio, d'une entité du plan de commande mobile ou d'un élément de calcul de trajectoire.

10. Dispositif selon l'une des revendications 8 à 9, dans lequel le deuxième paquet de contrôle S-BFD comprend un en-tête de routage de segment, l'en-tête de routage de segment du deuxième paquet de contrôle S-BFD comprenant un horodatage.

11. Dispositif selon la revendication 10, dans lequel le processeur est configuré en outre pour amener le dispositif à déterminer une métrique d'accord de niveau de service, SLA, en se basant sur au moins l'un ou l'autre du code de diagnostic ou de l'horodatage,
éventuellement dispositif dans lequel la métrique SLA comprend une latence d'un segment du chemin.

12. Dispositif selon l'une quelconque des revendications 8 à 11, dans lequel le processeur est configuré en outre pour amener le dispositif à identifier une perte de chemin, en se basant sur le code de diagnostic.

13. Dispositif selon l'une quelconque des revendications 8 à 12, dans lequel le processeur est configuré en outre pour amener le dispositif à identifier une panne du nœud de réseau, en se basant sur le code de diagnostic.

14. Dispositif selon l'une quelconque des revendications 8 à 13, dans lequel le processeur est configuré en outre pour amener le dispositif à déterminer le fait que le nœud de réseau a redémarré, en se basant sur le code de diagnostic.

15. support de stockage lisible par ordinateur, ledit support stockant un ou plusieurs programmes, le ou les programmes comprenant des instructions qui, lorsqu'elles sont exécutées par un dispositif informatique, amènent le dispositif informatique à mettre en œuvre le procédé ou bien font en sorte que la mise en œuvre dudit procédé soit effectuée selon l'une quelconque des revendications 1 à 7.
